# EUROPEAN PATENT APPLICATION

(11) **EP 3 723 066 A1**
(43) Date of publication of application: **14.10.2020**
(21) Application number: 19168465.3
(22) Date of filing: 10.04.2019
(51) Int. Cl.: G08G 1/16, G08G 3/02, G08G 5/04, G08G 1/005

(54) **METHOD FOR ASSISTING A PERSON IN ACTING IN A DYNAMIC ENVIRONMENT AND CORRESPONDING SYSTEM**

(71) Applicant: Honda Research Institute Europe GmbH, 63073 Offenbach/Main (DE)
(72) Inventor: Driessen, Tom, 2201XV Noordwijk (NL); Krueger, Matti, 63073 Offenbach (DE); Wiebel-Herboth, Christiane, 63073 Offenbach (DE)
(74) Representative: Beder, Jens

(57) **Abstract**

A method for assisting a person in assessing a dynamic environment comprises steps of obtaining information on states of at least two entities in a common environment, predicting a future behavior of each of the entities on the basis of the obtained information, estimating a time to event for at least one predetermined type of event involving the at least two entities and/or a position of occurrence of the event relative to the person or relative to a predetermined entity associated with the person, determining at least one measure of uncertainty for at least one of the estimated time to event and/or the estimated position of occurrence, and of generating a control signal for driving an actuator device. The control signal causes the actuator device to output a stimulus signal perceivable by the assisted person. The control signal encodes a relative direction of the predicted event with respect to the person or the predetermined entity and/or the time to event and further encodes the at least one determined measure of uncertainty. The stimulus signal is indicative of the relative direction and/or indicative of the time to event, and at least one parameter of the stimulus signal encodes the at least on measure of uncertainty.

## Description

The invention regards a method and a system for assisting a person in acting in a dynamic environment.

Acting in a dynamic environment is the more demanding the more entities are involved in the dynamic environment. A typical example is road traffic. Traffic volume is increasing in many regions of the world. A driver operating a vehicle has to cope with an increasing amount of information in order to arrive at adequate decisions on how to drive the vehicle. The number of assistance systems that are available on the market is increasing. These systems are designed to assist the driver in coping with his driving task. One important aspect is that any information provided by a system that is capable of perceiving the environment of a person or a vehicle does not need to be perceived by the vehicle driver. The same applies to other persons acting in a dynamic environment other than the traffic environment. Thus, the person assisted by a suitable assistance system can concentrate on other aspects of a scenario. Assistance systems may perform filtering of information with respect to its importance in many cases and assist the person in operating in the environment by reducing the person's workload.

A traffic scenario is one example in which it is desirable to assist a person in perceiving relevant, important, or even all aspects in his environment and in filtering information. Such assistance systems are also suitable for a person navigating a boat or a ship or any other person that has to act in a dynamic environment. EP 3 413 288 A1 discloses a basic concept for a human machine interface that communicates an approximate direction to a predicted event in a dynamic environment to the person using the assistance system. The direction to the predicted event, for example, a collision with another object, is communicated in combination with a measure of urgency associated with the predicted event in a combined signal.

Driver assistance systems analyze a scene that is sensed by physical sensors and assist a vehicle driver by presenting warnings, making suggestions on how to behave in the current traffic situation, or by controlling the vehicle operation in a semi-autonomous or even autonomous manner. These driver assistance systems often have the disadvantage that they require the vehicle driver to actively shift his or her attention in order to successfully acquire information on the current environment. Thus, the driver's concentration on other aspects of the traffic scenario is distracted, which may in turn result in a reduction of safety. It would be advantageous if there was a way to provide information to a driver or any other person that extends the person's receptive field without necessarily requiring an active shift in attentional resources otherwise employed for the driving task. Thus, information would be available that the person could otherwise not use for deciding on how to act. Such human sensory enhancement for dynamic situations is particularly advantageous in situations where entities move relative to one another.

However, the capabilities of the driver assistance system may change during execution of the task. For example, changing weather conditions could change the reliability of the sensors providing information on the current traffic scenario. As the information from the sensors is the basis of the driver assistance system's prediction, a decrease of sensor reliability will adversely affect the overall driver assistance system reliability. Another source of uncertainty arises from the difficulty of predicting a near future. A false understanding of the competences and the limitations of an assistance system may lead to a wrong use of the assistance system or even general refusal of automation provided by the assistance system.

A known negative effect is complacency. The driver may fully rely on the driver assistance system and insufficiently monitor the environment because of excessive trust into the automated feature by the person using the assistance system.

Another effect is automation bias, which is a tendency to favor a suggestion provided by the assistance system, although other information might indicate that it would be better to overrule this suggestion.

The object of the present invention is to improve assistance of a person in judging a situation in a dynamic environment and reacting appropriately.

The assistance method and the assistance system according to the independent claims solve this problem.

The dependent claims define further advantageous embodiments and aspects.

The method for assisting a person in assessing a dynamic environment comprises a step of obtaining information on states of at least two entities in a common environment. In a subsequent step, the method predicts a future behavior of each of the entities on the basis of the obtained information. The method further estimates a time to event for at least one predetermined type of event involving the at least two entities and/or a position of occurrence of the event relative to the person or relative to a predetermined entity associated with the person. The method includes a step of determining at least one measure of uncertainty at least for the estimated time to event or the estimated position or direction of occurrence. A control signal for driving an actuator device is generated, the control signal causing the actuator device to output a stimulus signal. The stimulus signal is perceivable by the person. The generated control signal encodes a relative direction of the predicted event with respect to the person or the predetermined entity and/or the time to event and further the at least one determined respective measure of uncertainty. The stimulus signal output by the actuator device is indicative of the relative direction and/or indicative of the time to event, and at least one parameter of the stimulus signal encodes the at least one measure of uncertainty included in the control signal.

In a case of estimating only a time to event for at least one predetermined type of event involving the at least two entities, the step of determining at least one measure of uncertainty includes determining the measure of uncertainty for the estimated time to event.

In a case of estimating only a position of event for at least one predetermined type of event involving the at least two entities, the step of determining at least one measure of uncertainty includes determining the measure of uncertainty for the estimated position of event.

The control signal includes the at least one determined measure of uncertainty for the estimated time to event in case that only the time to event is estimated. The control signal includes the at least one determined measure of uncertainty for the estimated position of occurrence in case that only the position of occurrence is estimated. The control signal may include both the at least one determined measure of uncertainty for the estimated time to event and the at least one determined measure of uncertainty for the estimated position of occurrence in case both the estimated time to event and the position of occurrence are estimated.

The measure of uncertainty may comprise an uncertainty of a predicted value for the respective parameter time to event or position of occurrence. It is to be noted, that the measure of uncertainty may define a probability that the event is predicted to occur if no intervening action by the assisted person. In this context, the measure of uncertainty may include a range of directions or a timespan. The range of directions defines a range in which the event is predicted to occur with a predefined certainty/probability. The timespan defines a time period in which the estimated time to event is located with a predefined certainty/probability.

Continuous communication of measures of uncertainty by the assistance system adjusts trust of the assisted person towards appropriate levels. The capability to fulfill the task in the dynamic environment in a cooperative manner by the driver assistance system and the human driver improves. The invention extends a human machine interface of an assistance system by additionally communicating relevant information about predicted events together with a relevant machine uncertainty. In particular, including uncertainty information in a stimulus signal communicated to the assisted person helps the person to make appropriate use of the information related to the currently experienced scenario. The person who is assisted in planning and executing actions may take full advantage of the capabilities of the assistance system while overreliance is avoided by informing the assisted person on limitations of the prediction. The inventive method is particularly advantageous since it uses stimulus signals for communicating information that are understandable in an intuitive manner. A preferred stimulus signal is a tactile signal, which does not occupy modalities like vision or hearing abilities already occupied for addressing the assisted person's task in the environment. In another example, vision or audio might be occupied by performing secondary tasks such as watching a movie or engaging in a conversation, while simultaneously addressing the task in the dynamic environment.

The inventive approach is also advantageous as it combines directly signaling urgency information, such as information on a time to event, with information on a related uncertainty measure. This particular feature goes far beyond providing a separate measure of assistance system reliability to the assisted person. The inventive method extends the concept for the human machine interface as described in EP 3 413 288 Alwhich communicates the approximate direction to a predicted event in the dynamic environment together with a measure of urgency associated with the respective approximate direction.

The inventive method extends the human machine interface by including information on a measure of uncertainty related to the direction of the event and/or time to event (TTE) in the stimulus signal. A saliency of the communicated stimulus signal is, for example, a function of the time to event. Simultaneously, the stimulus signal generated by the inventive method also provides information on at least one of an uncertainty of the communicated direction or the communicated TTE of the at least one event. The time to event defines the time starting from the current point in time until a specific event would occur if the assisted person undertakes no action.

The specific event may be determined as one event from a plurality of potential events, whose probability of occurrence exceeds a predefined threshold.

In the preferred embodiment, such an event will be a collision between two entities in a traffic scenario. Other events, the occurrence of which can be predicted, may also be thought of. The assisted person is enabled to assess a current quality level or reliability level of the assistance offered by the assistance system, and can arrive at this judgment without having to burden other communication channels such as monitoring visual or audible indicated quality indicators.

The method for assisting a person according to an advantageous embodiment comprises a step of determining the measure of uncertainty on the basis of an uncertainty in obtaining the information on the states of the at least two entities. The uncertainty may arise from acquiring the information about the states of the at least two entities. This may include an uncertainty of the initial sensing or in any further processing of the respective sensor output. According to a particularly preferred embodiment, the measure of uncertainty in obtaining the information regards at least one of sensor resolution, sensor noise, sensor failure, and sensor ambiguity. In particular, the effect of uncertainties of acquiring sensor data, for example, radar or image sensor data under adverse weather conditions, are communicated to the assisted person in combination with information derived from the acquired sensor data.

According to another embodiment, the method for assisting a person comprises determining the measure of uncertainty on the basis of an uncertainty in models used for predicting the future behavior. Thus, it is not only possible to take account of ambiguities of input values generated by the sensors but also an uncertainty generated by a model that leads to an uncertain outcome.

Uncertainties resulting from models used for describing the environment or future behavior of entities acting in the dynamic environment are not only taken into regard but are also communicated to the assisted person. The reliability of the information output by the assistance system can readily be assessed by the assisted person.

According to a further advantageous embodiment, the method comprises adapting the determined uncertainty taking into regard the predicted behavior and/or an awareness level of the user who acts in the actual dynamic environment. The method may in particular increase or decrease the determined uncertainty for generating an adapted measure of uncertainty. The control signal is then generated based on the adapted measure of uncertainty.

By adapting the determined measure of uncertainty, a more general increase of the assisted person's trust in the assistance system and the information output by the assistance system can be achieved. For example, when determining that the general scenario in the dynamic environment requires more attention than the assisted person currently spends, or that a specific person is to be assisted that has a tendency to rely on the assistance system to an inappropriate extent, the measure of uncertainty may be increased in order to increase the general awareness of the assisted person towards the current scenario in the dynamic environment. Determination of the awareness level may be performed on the basis of one or a plurality of sensors mounted on a vehicle and capable of observing the actions and behavior of a person.

The measure of uncertainty may define a spatial uncertainty, in particular a directional uncertainty. This enables the assisted person to intuitively grasp if he has to focus his attention to a specific direction or to monitor a wider region in order to take account of the predicted event. The probability increases that the assisted person's response and degree of attention will be more adequate to the predicted event.

The actuator device may output the stimulus signal signaling a plurality of relative directions simultaneously. Additionally or alternatively, the actuator device outputs the stimulus signal for a plurality of relative directions in a time sequential manner. The plurality of relative directions includes the relative direction of the predicted event and neighboring directions. Thus, in addition to the direction in which the event is predicted to occur, which is the direction with the highest probability for the event, other directions for which a lower probability is calculated may also be signaled to the assisted person.

Communicating (signaling) the determined measure of uncertainty for the direction and/or for the time to event using plural relative directions simultaneously or time sequentially enables generation of stimulus signals that use, for example, an intensity parameter of the stimulus signal for communicating a time to event and thereby a perceived urgency, while simultaneously and in the same stimulus signal, the uncertainty of the direction and/or the time to event is communicated using another parameter of the stimulus signal. The entire information is conveyed using a single type of stimulation perceivable by the assisted person, preferably a tactile stimulation by the actuator device, and the assisted person easily combines this information on direction, time to event, and assigned measure uncertainty.

Preferably, the actuator device according to an embodiment outputs the stimulus signal for the plurality of relative directions and modulates a parameter of the stimulus signal for each of the plurality of relative directions on the basis of a probability for the predicted event to occur in the respective relative direction.

The measure of uncertainty may define a temporal uncertainty applying to the estimated the time to event.

In a further embodiment of the method, the actuator device outputs the stimulus signal with a stimulus signal frequency being modulated according to the time to event. The stimulus signal frequency may in particular be a vibration frequency. The stimulus intensity is modulated according to a probability that the predicted event occurs at each particular time to event.

The stimulus signal may be pulse width modulated for indicating the determined measure of uncertainty. Alternatively, the stimulus signal may be amplitude modulated.

The stimulus signal may cause a perceivable stimulation at a dedicated location of the assisted person's body to encode the relative direction and, additionally, one or more further parameters of the stimulus signal encode the time to event and the measure of uncertainty.

Different parameters of the same stimulus signal enable to provide different but, nevertheless, related information important for assessing the predicted event by the assisted person.

The stimulus signal may be at least one of an auditory stimulus signal consisting of sound generated at or appearing to originate from a location representative for the relative direction, a visual stimulus signal consisting of a visual stimulus generated at or appearing to originate from a location representative for the relative direction, an electromagnetic stimulus signal interacting with the person's nervous system or body parts, the electromagnetic stimulus signal being applied to the person such that it stimulates at a location of the body representative for the relative direction, a chemical stimulus signal which is applied to the person such that it stimulates at a location of the body representative for the relative direction, a heat stimulus signal which is applied to the person at a dedicated location of the person's body to encode the relative direction to the predicted event, and a mechanical stimulus signal that is applied to the person such that it stimulates at a location of the body representative for the relative direction. The mechanical stimulus signal may, for example, comprise a touch, pressure, and/or vibration performed by a vibro-tactile actuator to the body of the assisted person.

The system for assisting a person in assessing a dynamic environment according to a second aspect of the invention comprises a unit for obtaining information on states of at least two entities in a common environment (state information obtaining unit). A processor of the system predicts a future behavior of each of the entities on the basis of the obtained information. The processor also estimates a time to event for at least one predetermined type of event involving the at least two entities and a position of occurrence of the event relative to the person. The processor is further configured to determine at least one measure of uncertainty for at least one of the estimated time to event and the estimated position of occurrence. The estimated position of occurrence may, for example define the position of origin for or a current location of a presumed cause of the predicted event. The system comprises a signal generator for generating a control signal. The control signal is configured to drive an actuator device, wherein the control signal causes the actuator device to output a stimulus signal perceivable by the person by its perceptual capabilities. The generated control signal encodes a relative direction of the predicted event with respect to the person or the predetermined entity and/or the time to event and further the at least one determined measure of uncertainty. The stimulus signal output by the actuator device is indicative of the relative direction and indicative of the time to event, and at least one parameter of the stimulus signal encodes the at least on measure of uncertainty.

The system for assisting a person according to a particular embodiment comprises the actuator device. The actuator device comprises a plurality of actuator elements of at least one of the following types: vibro-tactile actuator, pressure-applying actuator, loudspeaker, light emitter, electrode, induction coil, chemical emitter/agent, and heating element. The plurality of actuator elements may be arranged as an actuator array.

The description discusses advantageous embodiments with reference to the figures, in which
- Fig. 1: shows a block diagram illustrating major components of the assistance system for carrying out the method steps of the present invention,
- Fig. 2: a simplified flowchart illustrating the main steps of the assistance method,
- Fig. 3: a schematic overview of a particular actuator device according to an embodiment,
- Fig. 4: an example describing a stimulus signal in a traffic environment
- Fig. 5: an embodiment describing a stimulus signal in a traffic environment including a measure of uncertainty,
- Fig. 6: different options for encoding a measure of uncertainty in a stimulus signal in a traffic environment,
- Fig. 7: a first example for applying an assistance system in a traffic scenario,
- Fig. 8: a second example for applying the assistance system in a traffic scenario, and
- Fig. 9: a further example for using an assistance system according to an embodiment of the invention in a traffic scenario.

Same reference signs in the figures denote same or corresponding elements. The description omits a repetitive discussion of elements denoted with same reference signs in different figures for sake of conciseness. The features discussed with respect to different embodiments may advantageously be combined in further embodiments of the invention.

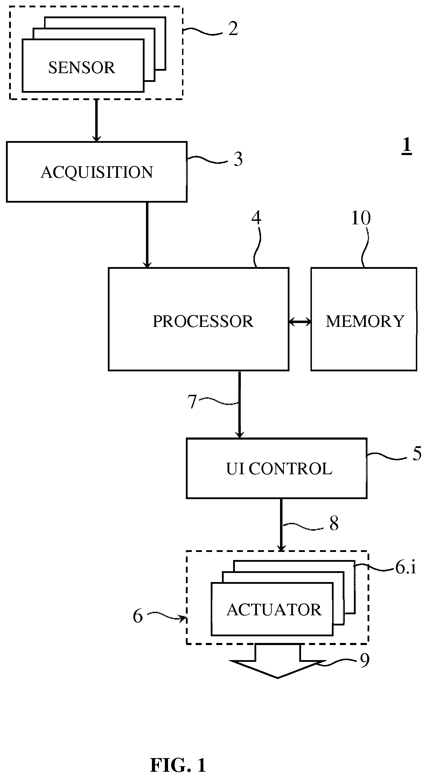

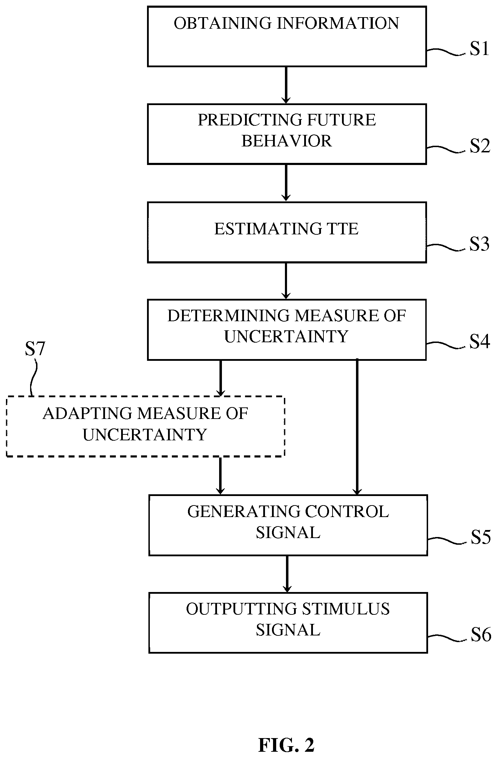

Fig. 1 shows a block diagram illustrating major components of the system 1 for carrying out the method steps of the present invention. The method, in particular the process of signal generation, is discussed in more detail with reference to fig. 2.

The system 1, which preferably is a driver assistance system, in particular the information obtaining unit 3, acquires information on a dynamic environment from at least one sensor 2. The at least one sensor 2 physically and repeatedly senses entities in a dynamic scenario, in which these entities may move relative to one another. The information obtaining unit 3 may acquire information from a variety of different types of sensors or resources.

This variety of sensor types and resources may provide data from radar sensors, cameras and/or laser scanners as examples for the sensor 2. Other sensors that provide information on states of the entities involved in a traffic scene may also be used. The acquired data is filtered for features that identify relevant entities in the environment. The filtered data is used to infer positions (locations) and distances.

As the data are provided with time stamps, the filtered data also may reveal information on velocities and/or accelerations of the entities in the environment. Integrating distances and positions of the entities over multiple samples may be used to infer current relative velocities between the entities.

The dynamic environment may be a traffic environment, in particular a road traffic environment. In this case, the assisted person may be a driver of a vehicle. The predetermined entity associated with the assisted person is then an ego-vehicle.

Based on information on states of at least two entities, information including velocity, acceleration, and geometry of the respective entity, as well as topographic information such as information on road curvature and road inclination obtained from map data or determined on the basis of online measurements, predictions about a future behavior can be calculated for each of the entities. An event, like a collision of the two entities, which will usually be the ego-vehicle and one further traffic participant, can then be calculated on the basis of the predicted future behavior of the ego-vehicle and the at least one other entity in the environment.

Sensing the environment is the basis for determining relative positions and velocities of the entities. "Relative" in the context of the present invention means relative to the person who is assisted by the system 1.

The term "relative" may also mean relative to the entity the person is associated with, for example, a vehicle that is controlled by the person. Using the vehicle controlled by the person and its boundaries as reference enables the person to learn and understand environmental properties relative to the vehicle the person is in control of.

From the sensed values, information on states of the entities, in particular information on their heading (direction) and their velocity, is determined. Determining this information on the environment is performed for every iteration of the method. The determined information is stored in a memory 10 and provides the basis for behavior prediction. Particularly, behavior prediction may include a trajectory estimation for each of the involved entities. For each iteration, individual trajectories and relative velocities between the involved entities are estimated in a processor 4 of the assistance system 1. The estimated values provide a basis for inferences or prediction of possible future events that involve the entity or entities of interest and other relevant entities in the environment.

Additional information that may be available and relevant for a scenario may be incorporated when generating the estimates. The processor 4 performs a time to event (TTE) estimation.

Algorithms for predicting a future behavior, for example, estimating future trajectories of the entities (including the ego-vehicle) are known in the art. For the prediction procedure, probability distributions over different TTEs could be generated for each direction in which potentially relevant events are identified.

A specific type of event involving at least two entities is a collision between entities. The time from a current time to a predicted collision between the two entities is a time to collision (TTC). The discussion of an embodiment of the invention uses the collision between two entities, in particular, the ego-vehicle and one other vehicle in a road traffic environment, and the corresponding TTC. The inventive method and system 1 are also applicable for other environments than road traffic, other entities than vehicles, and other types of events than collisions. The following explanations are made for a collision as a typical example for an event.

Decisions about which contact estimations should be used as the basis for directional TTC-encoding signals to be generated are made by the processor 4. Such decisions may be based on availability of predictions in a given direction, context-dependent criteria such as a proximity of the event to the assisted person, and relevance of the respective entity and the certainty of the prediction. Directional TTC estimates are encoded in signals, based on which the assisted person is stimulated via an actuator device 6.

The actuator device 6 is an interface, e.g., a tactile interface between the assistance system 1 and the assisted person. A control signal 8 is generated by a user interface control circuit 5 connected to the processor 4. The user interface control circuit 5 is adapted to drive the actuator device 6 by outputting the control signal 8 to the actuator device 6. The control signal generation encodes a direction of a predicted collision (or event, to be more general) and the corresponding estimated TTC such that one or a plurality of actuator elements 6.i commonly forming the actuator device 6 are driven to stimulate the assisted person at a location of its body indicative of the direction where the event is predicted to occur and with a perceived saliency indicative of the TTC.

Alternatively, stimulating the assisted person at the location of its body may be indicative of the direction towards a momentary (actual) location of the object, which is associated with the predicted event. For example, the location of its body may be indicative of the direction towards the momentary location of the object the vehicle controlled by the assisted person is predicted to collide with.

A straightforward approach would be to pick the most probable TTC. However, this criterion might for instance be of little value in cases of high entropy or multiple peaks of similar height. Furthermore, a short TTC corresponding to a high proximity of the entities involved in the predicted collision is in many scenarios more important than a long TTC corresponding to a low proximity of the entities in the predicted collision and could thus be given priority once it reaches a certain probability.

Furthermore, a relative impact of false positive and false negative signals on a driving performance of the person assisted by the inventive system 1 may preferably be considered in the specification of selection criteria.

The system 1 provides the assisted person with information on how long, starting from a current time, it might take until a predicted event, such as a collision involving an entity of interest (e.g., ego-vehicle) and at least one other entity in the environment, occurs and in which direction relative to the ego-vehicle this event is predicted to occur.

The use of this information may have positive effects on the assisted person's situation assessment in dynamic scenarios. This makes it particularly valuable in mobile scenarios such as riding a bike or motorcycle or driving a vehicle in a road traffic environment. Further application areas of the assistance system include navigating a boat, ship, or aircraft but also skiing and snowboarding.

Fig. 2 depicts a simplified flowchart illustrating the main steps of the assistance method.

The method starts with obtaining information on states of at least two entities in a common environment (S1). The common environment is typically a dynamic environment, for example, a road traffic environment. In case of a road traffic environment, the at least two entities may involve an ego-vehicle that is driven by the assisted person. This ego-vehicle mounts one or more sensors 2 for generating data representing information on the dynamic environment. The acquired data form a basis for the information obtained by the acquisition unit 3. The at least one other entity may be another vehicle, other traffic participant, or other object in the traffic environment, even a stationary object such as traffic lights.

In step S2, the assistance system 1 predicts a future behavior of each of the entities on the basis of the obtained information. In case of an assistance method for assisting a person in a road traffic environment, the assistance system1 may form part of an advanced driver assistance system. The future behaviors of the at least two entities includes, for example, predicted trajectories for the at least two entities. The future behaviors describe the most likely future evolvement of a current traffic scenario that is described in the obtained information on the environment.

In subsequent step S3, the processor 4 of the assistance system 1 calculates a time to event for at least one predetermined type of event involving the at least two entities. The processor 4 further calculates a location of occurrence of the predicted event relative to the assisted person or relative to a predetermined entity associated with the person (e.g., the ego-vehicle). The predetermined type of event may preferably be, but is not limited to, a collision of the at least two entities. The assistance system 1 predicts the possible collision for a future point in time, when the predicted trajectories of the at least two entities intersect or at least sufficiently converge at a specific location in the environment for the future point in time. The specific location defines the position and thus a direction of occurrence of the predetermined event. The time interval from the current point in time to the predicted point in time is the time to collision (time to event for arbitrary predicted events).

Although it is preferred to predict a position of the collision, it is also possible to predict only a time and a direction of the predicted event. Alternatively or additionally, a momentary positon of the entity that is predicted to collide with the entity controlled by the assisted person, and a corresponding relative direction of this potentially colliding entity, is determined.

For simplicity of explanation, the following description of the invention will refer to a prediction of the position only but it is evident that the same considerations apply to a prediction of the direction instead.

Proceeding to step S4, the assistance system 1 determines at least one measure of uncertainty for at least one of the estimated time to event, the estimated position or direction of occurrence of the event or the direction to the momentary position of an entity involved in the event. Determining the measure of uncertainty may comprise, for example, assigning a probability of occurrence to an entity's state in a set of possible states. For a traffic scenario, the state may be an event such as the before mentioned collision between two entities in the traffic environment. Thus, the measure of uncertainty may describe a position uncertainty (spatial uncertainty) concerning the position where the collision might occur. The measure of uncertainty may describe a position uncertainty of the direction to the momentary position of an entity involved in the event.

Additionally or alternatively, the measure of uncertainty may include an uncertainty in time (temporal uncertainty) when the predicted event may occur in the future.

Additionally or alternatively, the measure of uncertainty may include a temporal uncertainty which is provided artificially. For example, the measure of uncertainty may be adapted to increase the measure of uncertainty for events that are predicted to occur within a short time from now, e.g., have a short time to event although no such uncertainty is caused by the determination of the time to invent. This may increase safety as the assisted person's focus of attention is specifically drawn to those events or event-causing entities that have a high priority to be dealt with immediately.

The measure of uncertainty quantifies the reliability for the location and/or time of the predetermined event.

The determined measure of uncertainty may include applying at least one probability density function to a continuous variable or a probability mass function to discrete variable in time or space.

The assistance system 1 may then directly continue to step S5 and generate the control signal 8 for driving the actuator device 6. The control signal 8 is configured to cause the actuator device 6 to output a stimulus signal 9. The stimulus signal 9 output by the actuator device 6 is perceivable by the person using its perceptual capabilities. The generated control signal 8 encodes the relative direction of the predicted event with respect to the assisted person or the predetermined entity and the determined measure of uncertainty. Additionally or alternatively, the generated control signal 8 encodes the determined time to event or the other entity associated with the predicted event and the determined measure of uncertainty assigned to the determined time to event. Although it is generally possible to signal only the time to invent or only the direction associated with the predicted event, it is preferred to encode and subsequently output both. Thus, in the following it is assumed that the control signal 8 and the stimulus signal 9 signal information on the time to event as well as on the direction of the predicted event.

In step S6, the generated control signal 8, which is supplied to the actuator device 6, causes the actuator device 6 to output the stimulus signal 9. The stimulus signal 9 is indicative of the relative direction and indicative of the time to event for the at least one event. The stimulus signal 9 is characterized by a plurality of parameters that can be set independently to present different information.

The stimulus signal 9 may indicate a determined direction to a predicted event by modulating a first parameter of the stimulus signal 9 and indicate the assigned measure of uncertainty of the determined direction by varying this first parameter depending on the determined measure of uncertainty assigned to the determined direction. The first parameter may be a location of a vibro-tactile stimulation on the torso of the person, for example. The location on the torso corresponds to a direction associated with the predicted event relative to the assisted person. The measure of uncertainty may therefore result in a vibro-tactile stimulation covering or varying over a range (plurality) of locations.

The stimulus signal 9 may indicate a determined time to event using a second parameter and indicate an uncertainty of the estimated time to event by varying the second parameter depending on the determined measure of uncertainty assigned to the time to event. For example, the second parameter may be a pulse duration of a pulsed vibro-tactile stimulation or an intensity. The duration of the vibro-tactile stimulation (pulse width) on the torso corresponds to a TTC and varies with an assigned uncertainty. The measure of uncertainty may therefore result in a vibro-tactile stimulation over a time period. Alternatively, the time to event, more precisely the actual range of possible values of the time to event, may simultaneously be encoded in an intensity range of the stimulus signal 9. The stimulus signal 9 may convey via the intensity of the stimulus perceived by the person, an urgency of the predicted event to the assisted person. By coupling the time to event with the stimulus signal intensity, the stimulus signal communicates a saliency of the predicted event to the assisted person.

For example, the time to event (information) is modulated on a parameter (e.g. intensity) of the stimulus signal. The stimulus signal can be interpreted as an information-carrying signal that communicates a saliency of the predicted event to the assisted person.

An alternative embodiment of the assistance system 1 comprises a further step S7. After completing step S4 and having determined the measure of uncertainty, this particular embodiment proceeds to step S7 and adapts the initially determined measure of uncertainty. The determined measure of uncertainty may be adapted to provoke a specific effect on the assisted person. The determined measure of uncertainty may be increased in order to raise an awareness level of the assisted person towards the possibility of events in certain traffic scenarios or when a driver observation reveals that the assisted person falls below a predefined awareness level deemed necessary for executing a driving task in cooperation with the assistance system 1. Adapting the measure of uncertainty may include adding a predetermined constant value to the determined measure of uncertainty or multiplying the determine measure of uncertainty with a predefined factor. The adaptation may be a function of the actual value of the underlying parameter.

After adapting the measure of uncertainty in step S7, this embodiment of the method proceeds to step S5 of generating the control signal 8, now based on the adapted measure of uncertainty. Using the adapted uncertainty measure allows to feign an uncertainty so that overreliance of the assisted person can be avoided. Generally, it is possible to adapt the measure of uncertainty by increasing or by decreasing, e.g. depending on the application context or intended effect. In most cases, however, the intention is to avoid overreliance of the assisted person and communication of a low precision of a prediction result will motivate the assisted person to raise its attention.

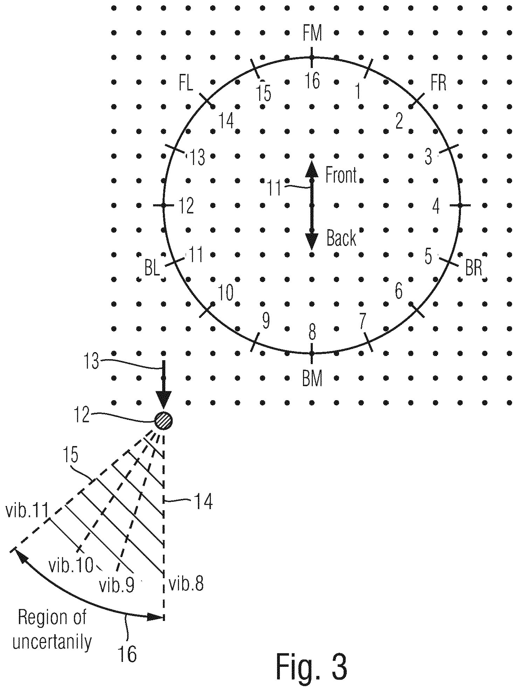

Fig. 3 provides a schematic overview of a particular actuator device 6 according to an embodiment.

The actuator device 6 is shown in a schematic view. The depicted actuator device 6 is adapted to provide a stimulus signal 9 to the assisted person by one or more of its actuator elements 6.i. The actuator elements 6.i of a particularly preferred embodiment are vibro-tactile actuator elements 6.i. The invention is, however, not limited to this specific type of actuator elements 6.i or output modality as will be discussed with more detail below.

Fig. 3 shows the plurality of actuator elements 6.i arranged in a closed loop arrangement around a torso of the assisted person. The actuator elements 6.i may accordingly indicate directions in an approximately horizontal plane by emitting respective individual stimulus signals commonly forming the stimulus signal 9. The actuator device 6 is therefore capable to emit stimulus signals 9 indicating a direction in a 2-dimensional (2D) space (plane). In the embodiment of an actuator device 6, the entire actuator device 6 comprises 16 actuator elements 6.1 to 6.16, which are arranged at the positions indicated by numbers 1 to 16. Six positions FL (front left), FM (front middle), FR (front right), BR (back right), BM (back middle) and BL (back left) are used to indicate locations or directions of predicted events on the ego-vehicle's lane, the left neighboring lane and the right neighboring lane. It can be seen in fig. 3 that the distances between actuator elements 6.i indicating the left, middle and right direction at the front side are smaller than on the backside. This is caused by perception capabilities of the human body. Obviously, the number of actuator elements 6.i is not limited to 16 and in case that a higher resolution shall be achieved, additional actuator elements may be provided. In some embodiments of the invention, a smaller number of actuator elements 6.i may suffice.

The depicted actuator device 6 is particularly suited for applying the assistance system 1 in a dynamic environment such as a traffic environment including land traffic such as vehicles, sea traffic such as ship navigation or traffic on runways of an airport. Alternatively, the actuator elements 6.i may be arranged as an array of actuator elements 6.i in an, at least partially, spherical or semi-spherical spatial arrangement, for example in an inlay of a helmet. This arrangement is particularly useful for application of the inventive assistance system 1 in a 3-dimensional (3D) environment (aerospace), for example, a ground based air traffic control environment or for assisting a person piloting an air vehicle such as a plane or a spacecraft. The actuator device 6 may arrange the plurality of actuator elements 6.i on a single base structure, for example, a belt for wearing around a waist on the torso of the person assisted by the assistance system 1.

In an alternative embodiment, the plurality of actuator elements 6.i is arranged around the torso of the person attached to two or even more base structures. For example, a first number of actuator elements 6.i may be integrated with a seat belt of a vehicle. The second number of actuator elements may be arranged integrally with a seat of the vehicle. The first number of actuator elements 6.i and the second number of actuator elements 6.i commonly constitute the plurality of actuator elements 6.i which cover the entire circumference of the torso of the person.

The actuator device 6 further comprises electronic circuitry and electronic interfaces not explicitly shown in fig. 3 but used to convert the control signal 8 into the plurality of individual drive signals for each of the actuator elements 6.i. The interface receives the control signal 8 transmitted from the user interface control circuit 5 and provides the control signal 8 to the electronic circuitry for a preprocessing. This preprocessing may comprise evaluating the received control signal 8 and generating the drive control signals for driving the individual actuator elements 6.i.

The schematic shown in fig. 3 indicates a base direction by a front vector 11. The electronic circuitry of the actuator device 6 outputs the individual control signals in alignment with the direction information in the control signal 9 and thereby with the spatial orientation of the environment as sensed by the sensor 2. The control signal 8 received by the interface may accordingly include directional correction information based on which the correction processing is performed. Thus, movements of the assisted person relative to the environment can be compensated in order to output the stimulus signal 9 with a correct spatial orientation to current orientation of the assisted person.

The following discussion assumes that an orientation of the assisted person coincides with a driving direction of an ego-vehicle operated by the assisted person.

The small illustration at the lower left of fig. 3 shows an example for communicating a specific scenario in a dynamic environment to the assisted person. The assisted person is depicted by a marker 12 in fig. 3. A predicted first event is communicated by a vector 13. The vector 13 represents a stimulation output by the actuator element 6.16 at a position 16 of the actuator device 6. The vector 13 indicates a predicted event in a frontal direction (FM) of the assisted person and/or the entity associated with the assisted person.

The assistance system 1, in particular the actuator device 6, communicates a predicted second event at the rear left arc of the direction relative to the assisted person. This second event is predicted with an assigned measure of uncertainty concerning the direction of the predicted second event. The measure of uncertainty of the second event is communicated by the actuator device 6 by actuating the actuator elements 6.8, 6.9, 6.10, and 6.11. The actuator device 6 thus indicates the second event to possibly occur in a range of spatial uncertainty between a first spatial border 14 and a second border 15. The range of spatial uncertainty defines a range of directions in which the event is predicted to occur. The term spatial uncertainty refers to an uncertainty about one or multiple coordinates describing a location of the event or an entity in the environment. These coordinates may be a direction or an angle and a magnitude in a polar coordinate system. The coordinates may also be axis components in a Cartesian coordinate system. The actuator elements 6.8, 6.9, 6.10, and 6.11 communicate the measure of spatial uncertainty assigned to the second event to the assisted person using the actuator device 6. The individual stimuli output by the actuator elements 6.8, 6.9, 6.10, and 6.11 encode the measure of uncertainty assigned to the second event in the specific example included in fig. 3.

The actuator elements 6.i may be activated simultaneously or in turn. A subsequent actuation of neighboring actuator elements 6.i may result in creating the illusion of a moving stimulus within the boundaries that are defined by the range of the measure of uncertainty.

Some example applications for the invention are now described and partially refer to an implementation of the invention with a tactile interface but most of the advantages are still present when using other interface modalities.

For the assistance system 1, preferably the tactile perception capability of the assisted person, for example, driver, navigator, or skier is used for providing a channel for stimulus signal transmission from the assistance system 1 to the assisted person. Communication is implemented using an array of tactile actuators (e.g. vibro-tactile actuator elements 6,i), which is arranged around the person's torso and which is capable of simultaneously varying the perceived stimulus locations, frequencies, and amplitudes (intensities). Using this tactile interface, the direction towards a relevant event with a TTE below a certain threshold corresponds to the location of the driver's torso, which is oriented towards this direction. For each such direction, additionally, the TTE may be encoded in the vibration frequency such that the vibration frequency approaches the assumed optimal excitation frequency for human lamellar corpuscles with shortening of the TTE. This provides the advantage of coupling stimulus detectability with situation urgency. Furthermore, encoding the TTE in the stimulus frequency has a high potential for personalization because stimulus amplitude and frequency range can be adapted to the assisted person's preferences and sensitivity. This further reduces a risk of creating annoying or undetectable signals from the assistance system 1 to the assisted person.

To form the actuator device 6 as mentioned in fig. 3, the actuator device 6 comprises a plurality of actuator elements 6.i, i =1, .., n with an integer n. The elements may be arranged attached to the person's seat belt and embedded in the area of the person's seat that is in contact with the person's lower back. In the illustration of fig. 3, n=16. This arrangement has the advantage that the person would not need to be bothered with putting on additional equipment. Therefore, a probability of actual usage of the actuator device 6 is increased at locations, where seat belts are common or even a statutory requirement.

Alternatively, the actuator device 6 can be embedded in a belt, a jacket or another piece of clothing that can be extended with an arrangement of tactile actuator elements 6.i around the waist of the person wearing the actuator device 6. To account for different body shapes, the spatial arrangement (especially the distances between neighboring elements) and/or the control of the actuator elements 6.i is adapted such that the perceived signal location always corresponds to the desired location with respect to the body.

Driving a car in an urban area can be a perceptually demanding task due to the large amount of traffic participants, road signs, traffic lights, etc. that need to be monitored in order to avoid accidents and regulation violations. In such cases it is not guaranteed that a driver notices all safety relevant objects. The present invention helps to draw a driver's attention to an aspect of a traffic situation that is about to be particularly relevant.

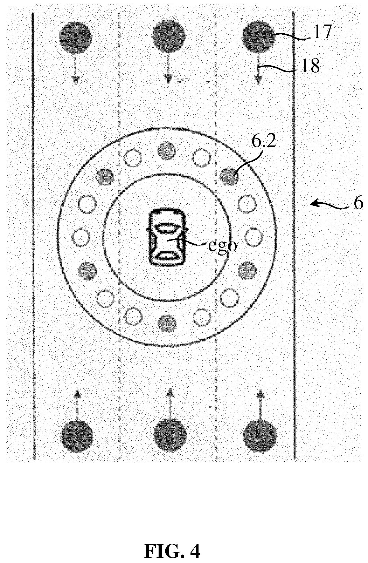

Fig. 4 shows an example describing the basic principle of direction indication of a predicted event without signaling an uncertainty. The stimulus signal 9 is generated using the actuator device 6 discussed with reference to fig.3. Fig. 4 presents a typical traffic scenario with an ego-vehicle operated by the assisted person driving on a center lane (ego lane) of a highway with three lanes. The assisted person uses the actuator device 6 with 16 actuator elements 6.i as shown in fig. 3.

Circle 17 represents a vehicle driving on the right lane in the same driving direction as the ego-vehicle, but with a lower speed. This lower speed of the vehicle 17 results in a decreasing distance between the vehicle 17 and the ego-vehicle indicated by relative velocity vector 18 corresponding to a difference in velocity between the ego-vehicle and the vehicle 17.

The assistance system 1 determines a time to event, in this case a time to collision TTC for a potential collision between the ego-vehicle and the vehicle 17. When the TTC falls below a threshold, for example, below 9 seconds, the actuator device 6 is controlled to indicate the predicted event. The user interface control circuit 5 generates the control signal 8, based on which the actuator element 6.2 generates an individual stimulus signal perceivable by the assisted person in the ego-vehicle.

Fig. 4 displays which of the actuator elements 6.i are assigned to which of the left lane, the ego lane, the right lane, and to the front or to the back of the ego-vehicle in order to operate according to an embodiment of the assistance system 1.

The actuator elements 6.i at the rear of the actuator device 6 indicating different lanes are spaced further apart than the actuator elements 6.i at the front of the actuator device 6 indicating the same lanes. Experiments showed that stimuli on the back side of a human person are better to distinguish in case of vibro-tactile actuator elements when they are spaced further apart. The figure illustrates a possible arrangement of actuator elements 6.i that are favorable according to such findings.

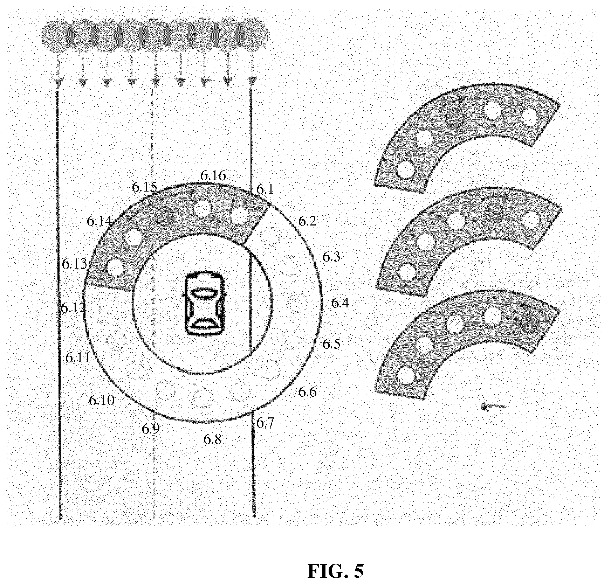

Fig.5 shows the ego-vehicle driving on a road with two lanes. A vehicle is approaching from the opposite direction. The assistance system 1 predicts a possible collision between the ego-vehicle and the vehicle. The assistance system 1 provides an ambiguous estimate for the location of the event on the basis of the obtained information of the environment.

The assistance system 1 controls the actuator device 6 in this traffic scenario such that the stimulus signal 9 generates individual stimuli that travel over a range displayed by the hatched area in fig. 5. In particular, the stimulus signal 9 is generated by the actuator elements 6.13, 6.14, 6.15, 6.16, and 6.1 of the actuator device 6. One activator element 6.i of the actuator elements 6.13, 6.14, 6.15, 6.16, and 6.1 is active at a time. The one actuator element is deactivated or at least decreases its activity as a neighboring activator element 6.i of the actuator elements 6.13, 6.14, 6.15, 6.16, and 6.1 is activated. The sequence of activation of the activator elements 6.i is controlled such that an illusion of a moving tactile stimulation on the body of the assisted person is created.

The stimulus signal 9 may include an individual center stimulus output by the center actuator element 6.15. The position of the center actuator element 6.15 may correspond to the predicted direction of the event. Over time, the actuator elements 6.i generating individual stimuli change. When the left border actuator element 6.13 is reached, the direction of change of actuator elements 6.i reverses. The actuator elements 6.13, 6.14, 6.15,... are then successively driven until the actuator element 6.2 is reached. Then, the direction changes, again. The entire range of involved actuator elements 6.i may be symmetrical to the center actuator element 6.15. Thus, an oscillation of the stimulus position is achieved, which communicates a measure of uncertainty for the predicted direction of the event.

Alternatively, the change of the activated actuator elements 6.i could be symmetrical, starting with the center element 6.15, moving to the edge and then start in the center again.

The described oscillation, which is illustrated on the right side of fig. 5, continues until the calculated TTC exceeds an upper threshold value and the actuator device 6 stops emitting the stimulus signal 9. Alternatively, a more reliable estimate for the direction may become available and the range of the entire stimulus signal 9 (number of involved actuator elements 6.i) is reduced accordingly. If a confidence value for a direction or location of the predicted event exceeds a predetermined threshold, signaling an uncertainty may be stopped and only an individual stimulus of one actuator element 6.i is generated. The one actuator element 6.i may for example be the locator element 6.16 arranged towards a front direction of the ego-vehicle.

The predetermined threshold may be set when designing the system or be adjustable according to user preferences.

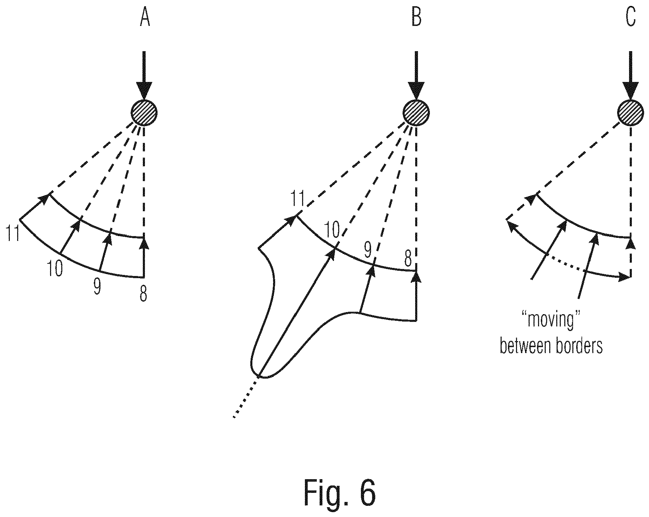

Fig. 6 displays some options for encoding a measure of uncertainty in the stimulus signal 9 in a traffic environment according to an embodiment.

According to option A, the stimulus signal 9 includes an equal signal intensity for each actuator element 6.i within the range of spatial uncertainty.

According to option B, the stimulus signal 9 includes further information on an underlying probability density function or probability mass function in the signal intensity for each of the actuator elements 6.i within the range of spatial uncertainty. Alternatively, the stimulus signal 9 may include further information on an underlying probability density function or probability mass function in the signal duration for each of the actuator elements 6.i within the range of spatial uncertainty. The probability density function defines a specific measure of uncertainty assigned to an estimated direction of a particular event. This information can be encoded in the stimulus signal 9 along the angular width of the uncertainty range. A parameter of the stimulus generated by the respective actuator element 6.i, for example, the duration of stimulation at particular location may correspond to the probability of the event for the corresponding direction. Alternatively, an intensity value of the output stimulus, is controlled according the corresponding location in the probability density function.

Option B may include generating the stimulus signal 9 such that a peak value of the probability density function is scaled to the TTE communicated via the intensity value.

Alternatively, a surface underlying the probability density function is determined to be proportional to the TTE value of the event.

Option C depicts generating the stimulus signal 9 such that the current stimulus is emitted by an actuator element 6.i and a next stimulus in time is output by one of the neighboring, in particular the immediately neighboring, actuator element 6.i. The stimulus signal 9 output according to option C creates the perception that the stimulus moves along the interfacing area between the torso (body) of the assisted person and the actuator device 6. Option C generates a stimulus signal 9 with an oscillating type of movement of a stimulus along the range of uncertainty defined by the uncertainty measure and corresponds to the embodiment of fig. 5.

The stimulus signal according to option C may even be combined with the stimulus signal 9 being coded using either of options A or B.

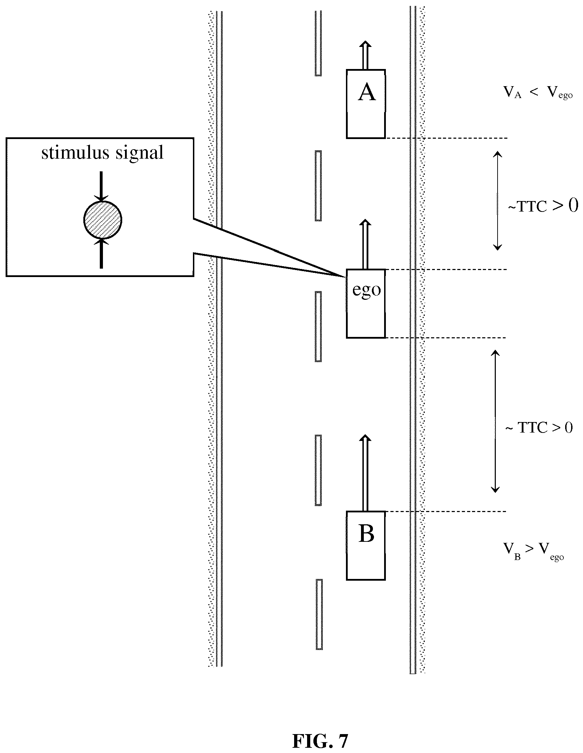

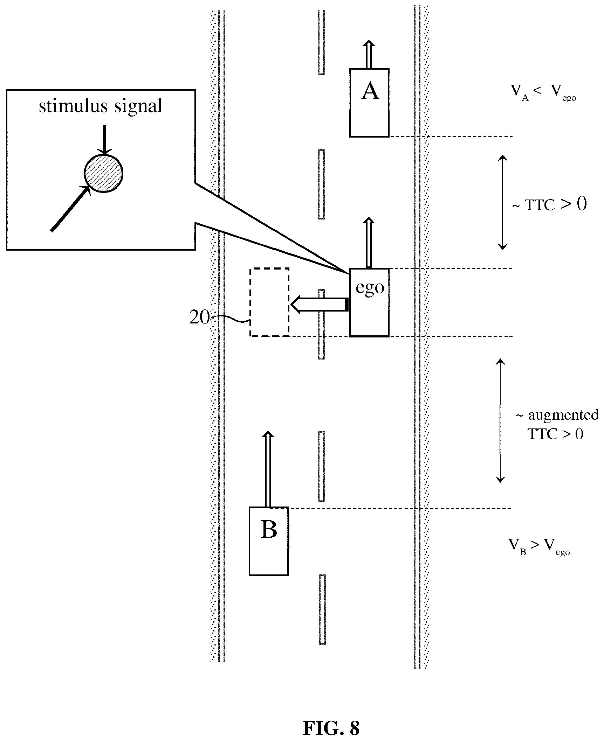

In order to illustrate possible scenarios where the invention may be applied, two traffic situations shall briefly be discussed with reference to figs. 7 and 8. These examples explain some details of the communication of predicted events. The assistance system 1 determines for an entity moving in the dynamic environment, whether the entity is on a potential collision path with the other entities and if so, from which direction relative to the entity these collisions are to be expected. For each of these directions, a time to event (TTE) is estimated and, optionally, conditional on the determined TTE falling below a predetermined threshold, a stimulus signal with a saliency that is modulated by the respectively estimated TTE is communicated to the assisted person associated with the moving entity.

The communicated stimulus signal 9 provides a saliency representing a function of a calculated time to event for a predicted event. A low TTE indicates a near oncoming predicted event, which means that the corresponding saliency of the stimulus signal 9 should be perceived as being higher than a saliency for the same type of event predicted associated with a calculated higher TTE. The TTE communication provides the effect of enhancing a human's perception on surrounding potential dangers and risks and their relative urgencies in the dynamic environment. Accordingly, a short overview on key capabilities of the assistance system and its specific human machine interface are provided with reference to figs. 7 and 8.

Figure 7 shows a first traffic situation in the dynamic traffic environment. In the first situation, the ego-vehicle operated by the assisted person approaches a vehicle A traveling along the same lane (ego lane) and in the same direction. A velocity of the ego-vehicle exceeds a velocity v_{A} of the vehicle A. Another vehicle B approaches the ego-vehicle from the rear. Vehicle B travels on the same lane as and with a greater velocity v_{B} than the ego-vehicle.

The assistance system 1 defines as a first event of interest a collision between the ego-vehicle on the one hand and the vehicle A on the other hand. The assistant system 1 calculates for this collision between the ego-vehicle and the vehicle A a time to event TTE which corresponds to a time to collision TTC_{A}. The assistance system 1 determines as a second event of interest a further collision between the ego-vehicle and the vehicle B. The assistance system 1 calculates for this second collision between the ego-vehicle and the vehicle B a time to event TTE which corresponds to a time to collision TTC_{B}.

The actuator device 6 notifies the assisted person by outputting a vibration by the actuator element 6.16, and simultaneously by another actuator element 6.8 . A respective strength of a vibration of the actuator elements 6.16 and 6.8 corresponds to the respective TTC_{A} or TTC_{B}.

Fig. 8 shows a second example for applying an assistance system in a traffic scenario.

The scenario in fig. 8 differs from the scenario depicted in fig. 7 insofar that the vehicle B drives on the left lane instead of the ego lane with a velocity v_{B} that is greater than the velocity v_{ego}. The assistance system 1 therefor predicts, contrary to the scenario shown in fig. 7, no event to occur in a direction directly opposite to a driving direction of the ego-vehicle.

Taking the functionality of the assistance system and its user interface as discussed with reference to fig. 7 into account, the actuator device 6 would output a stimulus signal 9 to the assisted person driving the ego-vehicle, wherein the stimulus signal 9 includes an actuator element 6.16 arranged at the front of the person generating a stimulus. The person would thus be alerted alone to the potential collision event predicted in a front direction (driving direction) of the ego-vehicle.

Nevertheless, analyzing the traffic scenario depicted in fig. 8 in more detail reveals, that there remains a potential risk, that the assisted person operating the ego-vehicle will consider to overtake the preceding vehicle A, since the current velocity v_{ego} is larger than the velocity v_{A}. In order to overtake vehicle A, the ego-vehicle will have to change from its current lane (ego lane) to the left lane. In case the ego-vehicle changes to the left lane, vehicle A, which is approaching from the rear of the ego-vehicle on the left lane, poses a potential threat. In terms of the assistance system 1 and assuming the ego-vehicle will proceed on the left lane in the near future, a collision between the ego-vehicle and vehicle B is to be predicted with a certain probability of occurrence. In order to assist the person driving the ego-vehicle, the assistance system 1 may inform the person about the possible dangers approaching from behind on the left lane, although the ego-vehicle is currently on the right lane.

Additionally or alternatively, the assistance system 1 may determine if a relevance criterion is met and only in case that he relevance criterion is met, the communication of the second collision event is performed. The relevance criterion may, for example, be that a calculated TTE for the first collision event is below a predefined threshold value. In this case, the person driving the ego-vehicle might indeed consider with a high probability to change from the ego lane to the left lane.

A magnitude of the stimulus signal 9 for signaling the second collision event can be based on the TTE of the augmented (fictional) position 20 of the ego-vehicle on the left lane. The magnitude of the stimulus signal 9 for signaling the second collision event is calculated to correspond to the time from a current time to an estimated time until the second collision would occur if the ego-vehicle would drive on the left lane at the position 20.

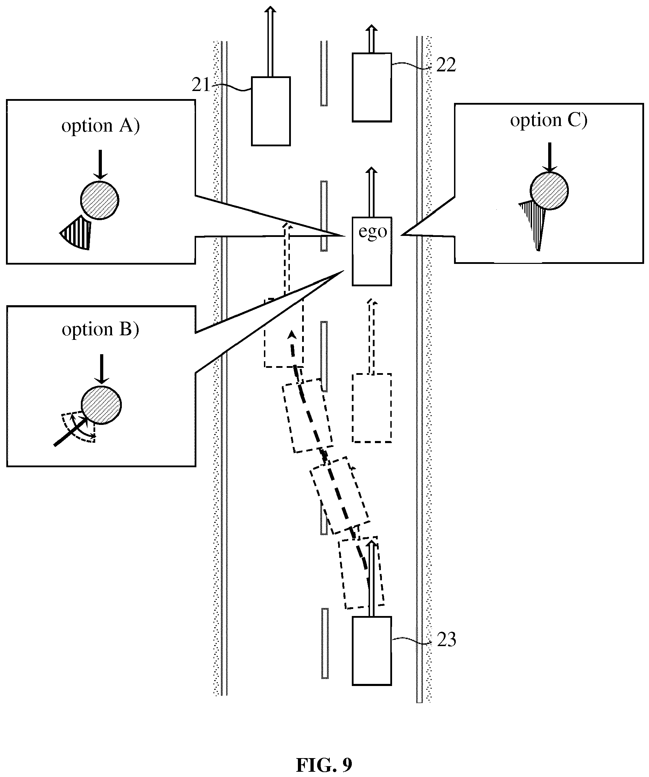

Fig. 9 provides an example for applying an assistance system 1 according to an embodiment of the invention in an exemplary traffic scenario. Figure 9 illustrates a traffic scenario as an example for a rapidly changing dynamic environment, in which the future behavior of one object can be predicted only with a certain degree of uncertainty. In particular, the reliability of the prediction by a driver assistance system 1 in the ego-vehicle concerning a vehicle 23 approaching the ego-vehicle from behind on the same lane can only be predicted with a high degree of uncertainty. The driver of the vehicle 23 has either the option to remain on the right lane on which he is currently travelling and to decrease the velocity to the velocity of the ego-vehicle or to change from the right lane to the left lane. This second option of changing the lane would offer the advantage that the vehicle 23 may continue to drive with its current velocity and does not need to slow down and therefore sacrifice speed by braking. Calculated probabilities of both options depend, for example, on how the vehicles 21, 22 with their respective vehicle velocities are perceived by the ego-vehicle and the vehicles 21, 22 and their respective drivers and/assistance systems.

Figure 9 displays a traffic situation and three different ways how the inventive assistance system 1 may communicate the prediction on future evolvement of the traffic scenario apparently involving a high degree of uncertainty.

In an option A), a case is depicted in which the spatial uncertainty is communicated to the assisted person by simultaneously signaling the whole range of possible directions of a possible collision of the ego-vehicle with the vehicle 23 simultaneously with a stimulus amplitude. For a visual interface, the depicted picture shown in option A) in fig. 9 may be presented on a display screen. In case of an auditory or haptic actuator device 6, the range of communicated directions for the collision event with the vehicle 23 is based on the determined measure of spatial uncertainty.

Option B) shows an alternative case, in which the directions for the potential collision event between the ego-vehicle and vehicle 23 and the assigned measure of spatial uncertainty are communicated sequentially by a stimulus signal 9 including a stimulus which appears to oscillate between boundaries of a spatial uncertainty range defined by the measure of spatial uncertainty assigned to the collision event.

Option C) shows yet another alternative, which might be understood as an extension or special case of option A). In addition to simultaneously communicating the potential directions of the predicted collision event according to option A), the stimulus signal 9 communicates respective levels of probabilities for all potential directions in the spatial uncertainty range by encoding the respective probabilities in the stimulus amplitudes of the stimulus signal 9. The stimulus signal 9 may therefore be said to encode a probability distribution for the potential future location of a target state deviation causing entity.

Option C) may be interpreted as a particular case of option B). In option C), the depicted size graph represents a stimulus duration that is indicative of the probability mass or the probability density associated with the corresponding direction.

The situations described so far all refer to a traffic environment involving vehicles such as cars, motorcycles, etc., and the entities involved are all vehicles. The invention may also be applied in other scenarios.

When navigating a boat or ship, an area below the water surface is often not clearly visible and even in case it is visible it is often difficult to visually determine the exact location and distance to submerged objects for a person situated above the water surface. With the present invention, a person navigating on the surface can be informed about a direction of a potential danger and a measure of spatio-temporal uncertainty can be assigned to the danger.

At a same time, obtaining information on the environment of the ship, for example, on the underwater environment using a sonar may include high measurement uncertainties due to temperature variations or differing salinity of the medium water.

Watercraft as well as other objects in rivers, lakes and oceans are furthermore often subject to drift and current, which makes frequent adjustments necessary to maintain a course and provides for an unstable sensor platform. Especially in coastal regions, the space in which a watercraft can move is often very limited by the underwater topography. Having a sense of the directions in which collisions are to be expected, given the present trajectory and speed, should facilitate navigation in such challenging environments. Collision risk with reefs and submerged objects could be reduced. In particular, providing the navigator on the ship with immediate information on a measure of spatio-temporal uncertainty associated with a respective time to event for the potential collision event or the direction to the potential event is beneficial for adapting the control of the ship not only according to a predicted and potentially dangerous event, but also to take account of the uncertainty of the predicted event.

One might argue that in such cases providing information about the absolute distance towards objects would be sufficient. However, for instance, in narrow passages, the navigator of a ship would constantly be alerted about nearby obstacles on the sides even if the course of the ship would make a collision very unlikely. A signal that communicates the predicted time to event for the predicted collision event would be less annoying, more relevant and naturally appropriate with respect to speed, predicted trajectory, and, important in the context of present invention, a measure for a reliability of the communicated values in the stimulus signal 9. The communicated measure of uncertainty provides the person navigating the ship with an intuitively to understand information with corresponding advantages as discussed in the embodiment discussed using a road traffic scenario. The navigator of the ship would receive no stimulus signal 9 when moving the ship on a straight path through a straight water channel. A bend in the water channel further ahead would be indicated by a stimulation based on a stimulus signal 9 with increasing saliency as the bend is approached by the ship and a decrease in signal saliency as well as change in location when the appropriate turning maneuver is eventually performed. If the detected bent ahead of the ship is predicted with a high uncertainty measure, for example, due to a radar detection probability being rather poor due to rain or snow, the navigator may reduce the velocity of the ship in order to have enough time to initiate a turning maneuver at the correct moment.

Assuming the ship is subject to a current from the side, the navigator would sometimes receive stimulations from the side in response to lateral acceleration towards the shallow area. Changing the course in response results in a direct feedback by a decreasing signal saliency when the correct maneuver is applied and an increasing saliency when steering in the wrong direction.

Thus, with a directional and/or TTE-encoding signal further a communicating measure of spatio-temporal uncertainty of the provided values for direction and/or TTE, collisions at high traveling speed could be avoided more easily and slow and controlled maneuvering in difficult environments would be facilitated.

The invention is also useful in situations where no vehicles at all are involved. For example, ski slopes are dangerous terrain. The direction of travel is mostly downhill but variations in individual course, speeds, skills and blood alcohol levels of skiers make constant monitoring of one's surroundings and the ability to react quickly crucial for a safe and enjoyable experience. A device that can support skiers and snowboarders by providing information about the direction and urgency of collision risks as well as respective measures of spatio-temporal uncertainty could improve safety on ski slopes.

In this scenario, a signal that communicates the TTE with its associated measure of uncertainty has some advantages:
A nearby skier whose trajectory does not spatiotemporally intersect with the own trajectory of the assisted person is not immediately safety-relevant. People who are skiing together in relatively close proximity might actually be annoyed by a signal that communicates the spatial distance. Furthermore, in more crowded scenarios constant simultaneous vibrations communicating the spatial distance to objects in multiple directions could confuse people and mask signals that are actually relevant, for instance, information about a fast approach of someone who lost control after catching an iced edge in the ground. In particular, not only receiving information on a direction of potentially risky events, but also being provided with a measure of uncertainty for the direction or a time to event of a predicted collision may be advantageous in the highly dynamic environment on a ski slope. Communicating the uncertainty of direction in an intuitively understandable manner simultaneously with the direction of a predicted collision enables the skier to focus his attention early on a rather wide area in his environment or to a specific direction from where the possibly colliding object is predicted. This will facilitate an early and adequate reaction of the skier, whose recognition capabilities are often affected by wearing a helmet, ski googles and who is essentially blind towards his rear.

In contrast to the vehicle scenarios in a road traffic environment described above, the skiing/snowboarding scenario puts rather strong constraints on the installation of required sensors and processing units. One possible alternative to wearable sensors could be an external monitoring of the slope and the locations and velocities of people. Warning signals could then be computed by a processor of a server belonging to the infrastructure of a ski resort and sent to the personal devices worn by skiers on the slopes. The personal devices each include communication interfaces for linking with the infrastructure and the user interface circuit 5 as well as the actuator device 6.

The assistance system 1 may be advantageously employed in a system or device for searching a person, for example, buried in an avalanche or in collapsed building. The assistance system 1 may guide a rescue team member towards a victim having an avalanche beacon device. The predicted event in this embodiment is the successful location and excavating of the victim by the assisted person. The assistance system 1 is configured to communicate exclusively an estimated direction and not an time to event to the assisted search and rescue team member, which is the assisted person in this example. Wireless signals emitted from the avalanche beacon enable the assistance system 1 to estimate a coarse direction towards the buried victim. The measure of uncertainty determined for the estimated direction is communicated to the assisted person in combination with the estimated direction. This may be performed by communicating a stimulus signal with a direction range corresponding to the determined measure of uncertainty.

Thus, the assisted person is enabled to employ, for example, further members of a search and rescue party efficiently by forming a search line, which covers the indicated directional range in which the buried person is located. In particular, in scenarios with multiple buried victims, and when time to locate and successfully excavate victims with only limited time and resources are available, the invention shows its advantages.

Alternatively or additionally, the assistance system 1 may also be configured to communicate a measure of uncertainty to a time to event and/or a location, wherein the communicated measure of uncertainty is configured to ensure a predetermined probability for the communicated location or time to event being correct.

In the specific cases illustrated here, the communicated direction information of an event may be limited to two spatial dimensions in a way such that a driver, navigator, or skier may be informed about where an object is horizontally with respect to the own vehicle or the person itself but not at which altitude the object is located or how tall it is.

## Claims

1. Method for assisting a person in assessing a dynamic environment, comprising the steps of:
- obtaining information (S1) on states of at least two entities in a common environment;
- predicting a future behavior (S2) of each of the entities on the basis of the obtained information;
- estimating a time to event (S3) for at least one predetermined type of event involving the at least two entities (A, B, ego) and/or a position or direction of occurrence of the event relative to the person or relative to a predetermined entity (ego) associated with the person;
- determining at least one measure of uncertainty (S4) for at least one of the estimated time to event or the estimated position or direction of occurrence;
- generating a control signal (8) (S5) for driving an actuator device (6), the control signal (8) causing the actuator device (6) to output a stimulus signal (9) being perceivable by the person,
wherein the generated control signal (8) encodes a relative direction of the predicted event with respect to the person or the predetermined entity (ego) and/or the time to event and further the at least one determined measure of uncertainty, and
wherein the output stimulus signal (9) is indicative of the relative direction and/or indicative of the time to event, and at least one parameter of the stimulus signal (9) encodes the at least one measure of uncertainty.

2. Method for assisting a person according to claim 1, wherein
the measure of uncertainty (S4) is determined on the basis of an uncertainty in obtaining the information on the states of the at least two entities (A, B, ego).

3. Method for assisting a person according to claim 2, wherein
the uncertainty in obtaining the information regards at least one of sensor resolution, sensor noise, sensor failure, and sensor ambiguity.

4. Method for assisting a person according to one of the preceding claims, wherein
the measure of uncertainty (S4) is determined on the basis of an uncertainty in models used for predicting the future behavior;

5. Method for assisting a person according to one of the preceding claims, further comprising
an adaptation of the determined measure of uncertainty (S7) taking into regard the predicted behavior or the at least two entities and/or an awareness level of the assisted person acting in the actual dynamic environment and generating the control signal on the basis of the adapted measure of uncertainty.

6. Method for assisting a person according to one of the preceding claims, wherein
the measure of uncertainty defines a spatial uncertainty.

7. Method for assisting a person according to one of the preceding claims, wherein
the actuator device (6) outputs the stimulus signal (9) signaling a plurality of relative directions simultaneously, the plurality of relative directions including the relative direction of the predicted event and neighboring directions.

8. Method for assisting a person according to one of the preceding claims, wherein
the actuator device (6) outputs the stimulus signal (9) signaling a plurality of relative directions time sequentially, the plurality of relative directions including the relative direction of the predicted event and neighboring directions.

9. Method for assisting a person according to claim 7 or 8, wherein
the actuator device (6) outputs the stimulus signal (9) for the plurality of relative directions and modulates a parameter of the stimulus signal for each of the plurality of relative directions on the basis of a probability for the predicted event occurring in the respective relative direction.

10. Method for assisting a person according to one of the preceding claims, wherein
the measure of uncertainty defines a temporal uncertainty of the time to event.

11. Method for assisting a person according to claim 10, wherein
the actuator device (6) outputs the stimulus signal with modulating a stimulus signal frequency according to the time to event and modulates a stimulus intensity according to a probability for the time to event.

12. Method for assisting a person according to one of the preceding claims, wherein
the stimulus signal (9) causes a perceivable stimulation of the person at a dedicated location of the person's body to encode the relative direction and simultaneously one or more further parameters of the stimulus signal are adapted to encode the time to event and the measure of uncertainty.

13. Method for assisting a person according to one of the preceding claims, wherein the stimulus signal (9) is at least one of
an auditory stimulus signal of sound generated at a location representative for the relative direction,
a visual signal consisting of a visual stimulus generated at a location representative for the relative direction,
an electromagnetic stimulus signal interacting with the person's nervous system or body parts, the electromagnetic signal being applied to the person such that it stimulates at a location of the body representative for the relative direction,
a chemical stimulus signal which is applied to the person such that it stimulates at a location of the body representative for the relative direction,
a heat stimulus signal which is applied to the person at a dedicated location of the person's body to encode the relative direction, and
a mechanical stimulus signal that is applied to the person such that it stimulates at a location of the body representative for the relative direction.

14. System for assisting a person in assessing a dynamic environment, the system comprising:
- a state information obtaining unit (3) for obtaining information on states of at least two entities (A, B, ego) in a common environment;
- a processor (4) for predicting a future behavior of each of the entities (A, B, ego) based on the obtained information and for estimating a time to event for at least one predetermined type of event involving the at least two entities (A, B, ego) and/or a position of occurrence of the event relative to the person or relative to a predetermined entity (ego) associated with the person,
wherein the processor (4) is further configured to determine at least one measure of uncertainty for at least one of the estimated time to event and the estimated position of occurrence;
- a signal generator (5) for generating a control signal (8),
wherein the control signal (8) is configured to drive an actuator device (6), the control signal causing the actuator device (6) to output a stimulus signal (9) perceivable by the person by its perceptual capabilities, and
wherein the generated control signal (8) encodes a relative direction of the predicted event with respect to the person or the predetermined entity (ego) and/or the time to event and further the at least one determined measure of uncertainty,
wherein the output stimulus signal (9) is indicative of the relative direction and/or indicative of the time to event, and at least one parameter of the stimulus signal (9) encodes the at least on measure of uncertainty.

15. System for assisting a person according to claim 14, further comprising the actuator device (6),
wherein the actuator device (6) comprises a plurality of actuator elements (6.i) of at least one of the following types: vibro-tactile actuator, pressure-applying actuator, loudspeaker, light emitter, electrode, induction coil, chemical emitter/agent, and heating element, and
the plurality of actuator elements (6.i) is arranged as an actuator array.
